# EUROPÄISCHE PATENTSCHRIFT

(11) **EP 2 177 461 B1**
(45) Veröffentlichungstag und Bekanntmachung des Hinweises auf die Patenterteilung: **02.05.2012**
(21) Anmeldenummer: 08018347.8
(22) Anmeldetag: 20.10.2008
(51) Int. Cl.: B65G 47/72

(54) **Materialverteilervorrichtung**
Material distribution device
Dispositif de répartition de matériau

(43) Veröffentlichungstag der Anmeldung: 21.04.2010
(73) Patentinhaber: Lindner, Manuel, 9800 Spittal/Drau (AT)
(72) Erfinder: Berglitsch, Siegfried, 9500 Villach (AT); Lindner, Manuel, 9800 Spittal/Drau (AT)
(74) Vertreter: Grünecker, Kinkeldey, Stockmair & Schwanhäusser

(56) Entgegenhaltungen:
- EP-A- 1 716 936
- DE-U1- 8 326 167
- JP-A- 62 056 219
- JP-U- 2 149 624
- JP-U- 3 038 465
- US-A- 3 554 356
- US-A1- 2008 135 464

## Beschreibung

### Gebiet der Erfindung

Die vorliegende Erfindung betrifft eine Vorrichtung zur Verteilung von Material eines Materialförderstroms. Die Erfindung betrifft insbesondere die Verteilung eines zu zerkleinernden Feststoffmaterials von einem Materialförderstrom auf mindestens zwei Materialförderströme.

### Stand der Technik

Das Problem des Verteilens von Material eines geförderten Materialstroms stellt sich in unterschiedlichen Anwendungsbereichen wie der Aufgabe von vorzerkleinertem Gewerbeabfall, Industrieabfall, Hausabfall etc. über Fördereinrichtungen, wie Förderbänder, auf Zerkleinerer, Shredder, Materialabscheider und ähnliche Vorrichtungen.

Aus der JP 03 038465 U ist ein Materialverteiler nach den Oberbegriff des Anspruchs 1 bekannt, der eine drehbare Wendetrommel mit drei Leitblechen umfasst, über die ein Materialstrom auf drei unterschiedliche Förderlinien verteilt wird.

In der Fördertechnik sind insbesondere für Staub- und Schüttgüter, wie beispielsweise Sand oder Kies, Verteilerklappen, beispielsweise in Form von Pendelklappen, sowie Verteilerschurren bekannt, die dazu verwendet werden, von einem Förderstrom auf einen anderen umzuschalten.

Während Verteilerklappen die Aufgabe der Verteilung von Staub- und Schüttgütern in zufriedenstellender Weise lösen, ist ihr Einsatz für die Verteilung von Förderströmen, die größere und unregelmäßigere Materialkomponenten aufweisen, wie etwa band- oder gurtartige längliche Materialkomponenten, oder die Papierreste, Stoffreste, wie Teppichreste, Plastikfolien oder ähnliches aufweisen, wie es in der Abfallaufbereitung und Förderung von Produktionsrestmengen üblicherweise der Fall ist, dahingehend problematisch, dass es bereits nach sehr kurzen Betriebszeiten zu Verstopfungen der Verteilerklappen kommen kann, was zu wiederholten unterbrechungsbedingten Anlagestandzeiten führt.

Es ist somit ein Ziel der vorliegenden Erfindung, eine verbesserte Materialverteilervorrichtung zur Materialverteilung von Förderströmen unterschiedlicher Materialzusammensetzung zur Verfügung zu stellen, die eine größere Zuverlässigkeit und insbesondere geringere Verstopfungsanfälligkeit als die bekannten Verteilerklappenvorrichtungen aufweisen.

### Beschreibung der Erfindung

Die obige Aufgabe wird gelöst durch die Materialverteilervorrichtung gemäß Anspruch 1, d. h. eine Materialverteilervorrichtung zum Verteilen eines Materialstroms auf zumindest eine oder zwei oder mehr Förderlinien, die eine drehbare Wendetrommel umfasst, die wiederum zumindest ein Leitblech umfasst und derart angeordnet ist, dass sie den zu verteilenden Materialstrom über das zumindest eine Leitblech und teilweise oder vollständig auf die erste und/oder zweite Förderlinie verteilen kann. Unter dem Bergriff der 'Wendetrommel' wird hier allgemein eine drehbare, im wesentlichen zylinderförmige Einrichtung mit einer Drehwelle verstanden.

Die Materialverteilervorrichtung umfasst weiterhin eine erste Ablaufschurre, über die zumindest ein Teil des zu verteilenden Materialstroms auf eine erste Förderlinie verteilt werden kann, und eine zweite Ablaufschurre, über die zumindest ein Teil des zu verteilenden Materialstroms auf eine zweite Förderlinie verteilt werden kann; und es ist die drehbare Wendetrommel, die zumindest das eine Leitblech umfasst, dazu ausgebildet, den zu verteilenden Materialstrom über das zumindest eine Leitblech und teilweise oder vollständig auf die erste und/oder zweite Ablaufschurre zu verteilen.

Weiterhin umfasst die Wendetrommel ein erstes, ein zweites und ein drittes Leitblech, und es wird der zu verteilende Materialstrom in einer ersten Position der drehbaren Wendetrommel über das erste Leitblech vollständig auf die erste Ablaufschurre bzw. die erste Förderlinie verteilt, in einer zweiten Position der drehbaren Wendetrommel über das zweite Leitblech vollständig auf die zweite Ablaufschurre bzw. die zweite Förderlinie verteilt, und in einer dritten Position der drehbaren Wendetrommel über das dritte Leitblech teilweise auf die erste Ablaufschurre bzw. die erste Förderlinie und teilweise auf die zweite Ablaufschurre bzw. die zweite Förderlinie verteilt.

Hierbei ist das erste Leitblech kontinuierlich und konvex gegenüber dem zu verteilenden Materialstrom bei Auftreffen desselben auf das erste Leitblech ausgebildet, das zweite Leitblech kontinuierlich und konkav gegenüber dem zu verteilenden Materialstrom bei Auftreffen desselben auf das zweite Leitblech ausgebildet, und das dritte Leitblech als ein zweigeteiltes gegenüber dem zu verteilende Materialstrom bei Auftreffen desselben auf das dritte Leitblech konkaves Blech ausgebildet, wobei die zwei Teile des zweigeteilten dritten Leitblechs einander überlappen, und das dritte Leitblech ein Trennblech darauf zur Aufteilung des zu verteilenden Materialstroms teilweise auf die erste Ablaufschurre und teilweise auf die zweite Ablaufschurre umfasst.

Mit dem Begriff "Schurre" wird, wie es im Stand der Technik üblich ist, eine Rutsche oder Rinne bezeichnet, über die das verteilte Material auf die Förderlinien verbracht werden kann. Auch kann die Schurre prinzipiell einfach durch ein geneigtes Blech realisiert sein. Jede Ablaufschurre kann ein oder mehrere Abweiserbleche und/oder eine oder mehrere Leitnasen darauf ausgebildet aufweisen, so dass ein über die Breite der jeweiligen Ablaufschurre gleichförmiger Materialstrom erzielt werden kann.

Die Förderlinien können durch irgendwelche Fördereinrichtungen, wie sie im Stand der Technik bekannt sind, realisiert sein. Der Ausdruck "Blech" soll hier nicht hinsichtlich des Materials, aus denen die beanspruchten Leitbleche bestehen, einschränkend aufgefasst werden. Vielmehr können die Leitbleche (und weiter unten beschriebene Bleche) aus verschiedenen geeigneten Materialien, wie z.B. aus Kunststoff, z.B. Polyamid, oder aus Metallblech, beispielsweise Aluminiumblech, Nirosta-Blech, etc., hergestellt werden. Der zu verteilende Materialstrom (Förderstrom) kann insbesondere Gewerbeabfall, Industrieabfall, Hausabfall etc., z.B. (Hart-)Kunststoff, Textilien, Verbundstoffe, Gummi oder Althölzer umfassen.

Abweichend von dem Stand der Technik wird in der vorliegenden Erfindung eine drehbare Wendetrommel verwendet, um einen Materialstrom (das Material eines Förderstroms) über zumindest ein auf der Wendetrommel angebrachtes Leitblech auf eine oder mehrere andere Förderlinien zu verteilen. Durch das Bereitstellen der Wendetrommel wird, insbesondere im Vergleich zu der herkömmlichen Verteilerklappentechnik, eine Verstopfung der Materialverteilervorrichtung durch Komponenten des zu verteilenden Materialstroms wirksam verhindert. Ein Verstopfen/Verklemmen von Materialverteilerklappen kann in der erfindungsgemäßen Materialverteilervorrichtung nicht auftreten, da die Materialverteilung über zumindest ein durch die Wendetrommel in eine entsprechende Position gebrachtes Leitblech erfolgt.

Die verschiedenen Ablaufschurren sind dabei so ausgebildet, dass sie die genannten Materialverteilungen bewirken. Je nach gewünschter Materialverteilung wird die Wendetrommel entsprechend gedreht. Eine Änderung der Materialverteilung ist somit, insbesondere auch während des Betriebs, der Materialverteilervorrichtung leicht und problemlos möglich und kann manuell und/oder automatisch erfolgen.

Die Leitbleche können die gewünschten Materialverteilungen auf relativ einfach herzustellende Weise mit großer Zuverlässigkeit und Haltbarkeit zur Verfügung stellen. Das konvexe Leitblech kann dabei zum Zentrum der Drehtrommel hin gekrümmt sein. Gemäß einer vorteilhaften Anordnung sind das zweite und dritte Leitblech derart ausgebildet und angeordnet, dass es zumindest einen Radiusvektor der Drehtrommel gibt (der vom Zentrum der Drehtrommel zum Umfang derselben zeigt), der das zweite bzw. dritte Leitblech zweimal schneidet, und das erste Leitblech ist derart ausgebildet und angeordnet, dass es keinen Radiusvektor der Drehtrommel gibt, der das erste Leitblech mehr als einmal schneidet, wodurch die gewünschte Materialaufteilung zuverlässig realisiert werden kann.

Das erste, zweite und dritte Leitblech können insbesondere derart über den Umfang der drehbaren Wendetrommel angeordnet sein, dass mit einer vollständigen Umdrehung der Wendetrommel die erste, zweite und dritte Position erreicht werden können, so dass die jeweils gewünschte Materialaufteilung leicht und schnell erreicht werden kann.

Insbesondere kann das dritte Leitblech dazu ausgebildet sein, 10 % bis 90 %, insbesondere 20 % bis 80 %, des zu verteilenden Materialstroms auf die erste Ablaufschurre und den Rest des zu verteilenden Materialstroms auf die zweite Ablaufschurre aufzuteilen. Das Trennblech des dritten Leitblechs kann vorzugsweise in seiner Längsrichtung senkrecht zu der Welle der Wendetrommel und zu dem auf dasselbe auftreffenden zu verteilenden Materialstrom angeordnet sein, so dass die Fläche der Kante des dritten Leitblechs, auf die der Materialstrom trifft, senkrecht zu Bewegungsrichtung desselben ausgerichtet ist. Hierdurch kann erreicht werden, dass, wenn bandförmige Komponenten des Materialstroms sich um die Kante legen, diese von nachfolgenden Materialkomponenten mitgenommen und somit weitertransportiert werden und die Materialverteilervorrichtung nicht verstopfen. Das Trennblech kann an der Welle der Wendetrommel, zu der seine Längsseite senkrecht ausgerichtet ist, befestigt sein.

Gemäß einer Weiterbildung der erfindungsgemäßen Materialverteilervorrichtung ist das Trennblech entlang der Wendetrommel beweglich justierbar ist, so dass durch das dritte Leitblech ein vorbestimmter Teil des zu verteilenden Materialstroms auf die erste Ablaufschurre und ein vorbestimmter Teil des zu verteilenden Materialstroms auf die zweite Ablaufschurre aufgeteilt wird. Nach gewünschter Justage kann das Trennblech, beispielsweise mit einer Klemmeinrichtung, fixiert werden. Es kann jedoch auch bevorzugt werden, eine Justiereinrichtung vorzusehen, die dazu ausgebildet ist, das Trennblech während des Betriebs der Materialverteilervorrichtung entlang der drehbaren Wendetrommel mithilfe eines Motors oder ähnlichem zu justieren. Dadurch wird die Flexibilität des Einsatzes und des Betriebsablaufs der Materialverteilervorrichtung weiter erhöht

Die erfindungsgemäße Materialverteilervorrichtung kann weiterhin eine Walze, insbesondere eine Splitwalze, umfassen, die zwischen der Wendetrommel und den der Wendetrommel nächstliegenden Kanten der ersten und der zweiten Ablaufschurre, insbesondere derart, dass sie die Teilungskante der ersten und der zweiten Ablaufschurre bildet, angeordnet ist. Diese Walze ist dahingehend vorteilhaft, dass sie ein VerklemmenNerstopfen weiter verhindert. Für diese Walze und für die Wendetrommel können separate und separat gesteuerte Antriebseinrichtungen, wie beispielsweise Drehstromgetriebemotoren, die direkt oder über eine Riemen- oder Kettenübersetzungen auf die Welle der Drehtrommel bzw. Achse der Splitwalze wirken, vorgesehen werden.

Die vorliegende Erfindung stellt weiterhin zur Verfügung:
Ein Materialfördersystem, das umfasst:
   eine erste Fördereinrichtung, insbesondere ein Förderband, das zum Fördern eines zu verteilenden Materialstroms ausgebildet ist;
   die Materialverteilervorrichtung gemäß einem der vorhergehenden Beispiele;
   eine zweite Fördereinrichtung, insbesondere ein Förderband, das zum Fördern zumindest eines Teils des von der Materialverteilervorrichtung über die erste Ablaufschurre verteilten Materialstroms ausgebildet ist; und
   eine dritte Fördereinrichtung, insbesondere ein Förderband, das zum Fördern zumindest eines Teils des von der Materialverteilervorrichtung über die zweite Ablaufschurre verteilten Materialstroms ausgebildet ist.

Weitere Merkmale und beispielhafte Ausführungsformen der vorliegenden Erfindung werden nachfolgend anhand der Zeichnungen näher erläutert. Es versteht sich, dass die Ausführungsformen nicht den Bereich der vorliegenden Erfindung erschöpfen. Es versteht sich weiterhin, dass einige oder sämtliche der im Weiteren beschriebenen Merkmale auch auf andere Weise miteinander kombiniert werden können.
Figur 1 stellt ein Beispiel für eine Materialverteilervorrichtung gemäß der vorliegenden Erfindung für Materialaufteilung von einem Förderstrom auf einen oder zwei andere Förderströme dar.
Figur 2 stellt ein Beispiel für eine Materialverteilervorrichtung gemäß der vorliegenden Erfindung dar, welche eine Wendetrommel zum Ableiten von Materialströmen mit darauf montierten Leitblechen umfasst.

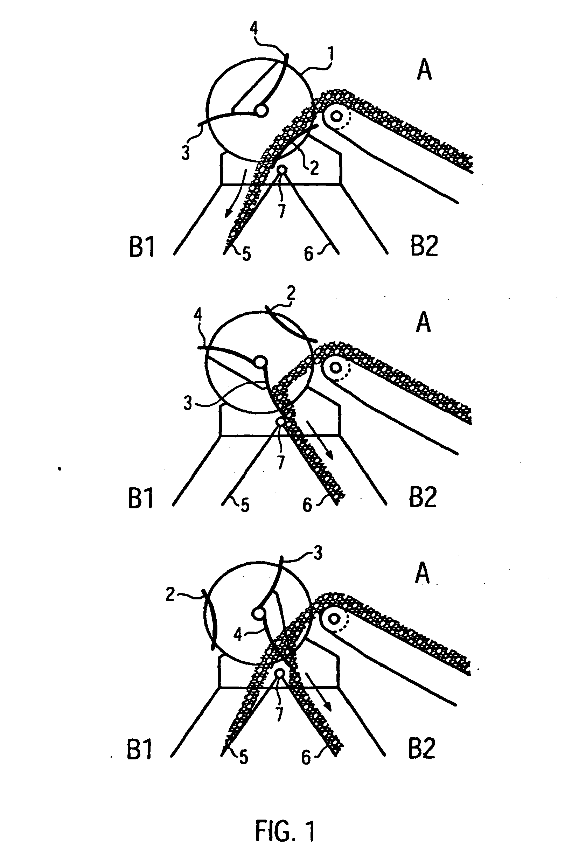

Wie in Figur 1 gezeigt, dient eine beispielhafte Ausführungsform der erfindungsgemäßen Materialverteilervorrichtung der Verteilung eines Förderstroms A, der in dem gezeigten Beispiel auf einem Förderband gefördert wird, auf eine oder zwei Förderlinien bzw. Förderströme B1 und B2. Der Förderstrom kann insbesondere Gewerbeabfall, Industrieabfall, Hausabfall etc., z.B. (Hart-)Kunststoff, Textilien, Verbundstoffe, Gummi oder Althölzer (wie Paletten und Spanplatten) als Materialkomponenten umfassen. Die in Figur 1 gezeigte Materialverteilervorrichtung umfasst eine drehbare Wendetrommel 1, die drei verschiedene Leitbleche 2, 3 und 4 umfasst. Diese Leitbleche sind so über dem Umfang der Wendetrommel 1 angeordnet, dass bei einer vollständigen Umdrehung der Wendtrommel 1 die unterschiedlichen in Figur 1 dargestellten Positionen der Leitbleche bezüglich des zu verteilenden Förderstroms A erreicht werden.

In der oberen Darstellung von Figur 1 befindet sich die drehbare Wendetrommel in einer solchen Position, dass über das Leitblech 2, welches gegenüber dem zu verteilenden Material des Förderstroms A bei Auftreffen desselben auf das Leitblech 2 konvex ausgebildet ist, eine Verteilung des Materials des Förderstroms A vollständig auf den Förderstrom B1 erfolgt. Das Leitbleich 2 ist hierbei durchgehend (kontinuierlich), beispielsweise aus Nirostastahl, ausgebildet, und lässt keine auch nur teilweise Verteilung des Förderstroms A auf eine Förderlinie/einen Förderstrom B2 zu.

Wie es in Figur 1 gezeigt ist, umfasst die Materialverteilervorrichtung weiterhin eine erste Ablaufschurre 5 und eine zweite Ablaufschurre 6. In der oberen Darstellung der Figur 1 wird der Förderstrom A über die erste Ablaufschurre 5 vollständig in Form des Förderstroms B1 verteilt.

In der mittleren Darstellung der Figur 1 ist die drehbare Wendetrommel 1 in eine solche Position gedreht, dass über das, gegenüber dem zu verteilenden Förderstrom A bei Auftreffen des Materials des Förderstroms A auf dasselbe konkav ausgebildete, zweite Leitblech 3 eine vollständige Verteilung des Förderstroms A auf den Förderstrom 82 erfolgt. Das zweite Leitblech 3 unterscheidet sich von dem ersten Leitblech 2 lediglich in der Art der Krümmung der Oberfläche (konvex oder konkav). Auch sind, wie in der Figur 1 gezeigt, das erste Leitblech 2 und das zweite Leitblech 3 verschieden an der Wendetrommel 1 angeordnet. So befindet sich das erste Leitblech 2 peripher an der Wendetrommel 1, wohingegen das zweite Leitblech 3, wie auch das dritte Leitblech 4, sich bis zum Zentrum der Wendetrommel 1 erstrecken.

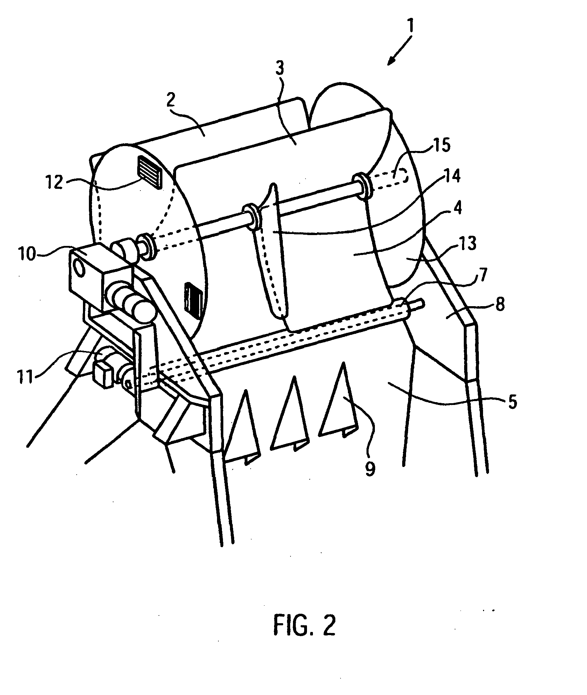

In der unteren Darstellung der Figur 1 schließlich befindet sich die drehbare Wendetrommel 1 in einer gedrehten Position, in der der Förderstrom A über das dritte Leitblech 4 teilweise auf den Förderstrom B1 und teilweise auf den Förderstrom B2 verteilt wird. Die Verteilung kann beispielsweise zu 10 % bis 40 % des Förderstroms A auf den Förderstrom B1 und 90 % bis 60 % auf den Förderstrom 82 oder umgekehrt erfolgen. Das dritte Leitblech 4 ist aus zwei einander überlappenden Teilen ausgebildet und umfasst ein Teilblech (nicht in Figur 1 gezeigt, siehe jedoch Figur 2), dass in Form eines Teilungsschwerts entlang der Förderrichtung des zu verteilenden Förderstroms A derart angestellt ist, dass die Kante desselben, auf die das Material des Förderstroms A trifft, senkrecht zu der Förderrichtung des Förderstroms A ausgerichtet ist (d.h. die Flächennormale der Kantenfläche ist parallel zu der Förderrichtung des Förderstroms A bei Auftreffen auf die Kante). Hierdurch wird erreicht, dass bandförmige Materialkomponenten des zu verteilenden Förderstroms A, die sich bei der Aufteilung des Förderstroms A auf die Förderströme 81 und B2 an der Auftreffkante des Trennblechs umlegen, durch nachfolgende Materialkomponenten mittransportiert werden, sodass in Art eines Selbstreinigungsprozesses im Betrieb der Materialverteilervorrichtung einem Verstopfen derselben vorgebeugt wird.

In dem in Figur 1 gezeigten Beispiel umfasst die Materialverteilervorrichtung des weiteren eine Splitwalze 7, die zwischen der ersten 5 und zweiten 6 Ablaufschurre und der drehbaren Wendetrommel 1 an der Teilungskante der Ablaufschurren 5, 6, angeordnet ist bzw. diese bildet. Diese Splitwalze 7 dreht sich im Betrieb der Materialverteilervorrichtung mit konstanter Geschwindigkeit und verhindert ein Hängenbleiben band- oder schnurförmiger Materialkomponenten wie auch von Kunststofffolien und Papier- und Stoffresten des Förderstroms A.

Sowohl die Wendetrommel 1 wie auch die Splitwalze 7 werden jeweils durch einen eigenen Antrieb angetrieben. Beide Antriebe können in Form eines Drehstromgetriebemotors, der direkt oder über eine Riemen- oder Kettenübersetzung auf die zentrale Welle der Drehtrommel 1 bzw. Achse der Splitwalze 7 wirkt, ausgebildet sein.

In Figur 2 ist eine beispielhafte Ausführungsform der Materialverteilervorrichtung gemäß der vorliegenden Erfindung, wie sie beispielsweise in dem in Figur 1 gezeigten Aufbau Verwendung finden kann, in größerem Detail gezeigt. Eine drehbare Wendetrommel 1 ist oberhalb eines Gehäuses 8 mit eingebauten Ablaufschurren, von denen eine Ablaufschurre 5 gezeigt ist, angeordnet. Die Ablaufschurren, beispielsweise auch die Ablaufschurre 5, weisen Leitnasen oder Abweiserbleche 9 zur gleichförmigen Verteilung aufgeteilter Förderströme entlang der Breite der Ablaufschurren. Wie in dem in Figur 1 gezeigten Beispiel weist die drehbare Wendetrommel 1, die über einen Antrieb 10 gedreht werden kann, Leitbleche 2, 3, und 4 auf, über die eine Aufteilung des in Figur 1 gezeigten Förderstroms A auf die ebenfalls in Figur 1 gezeigten Förderströme B1 und B2 ermöglicht wird.

Eine über dem Antrieb 11 antreibbare Splitwalze 7 ist in dem Gehäuse 8 eingebaut und verhindert ein Hängenbleiben band- oder schnurförmiger Materialkomponenten wie auch von Kunststofffolien und Papier- und Stoffresten an der oberen Kante der Ablaufschurre 5.

Die drehbare Wendetrommel kann über den Antrieb 10 in zumindest drei verschiedene Positionen, wie auch in Figur 1 gezeigt, gedreht werden. Es versteht sich, dass die Drehtrommel mehr als drei unterschiedliche Leitbleche, insbesondere vier oder fünf Leitbleche, beispielsweise zur Aufteilung eines Förderstroms in mehr als zwei Förderströme oder für eine prozentual unterschiedliche Aufteilung auf zwei Förderströme, aufweisen kann. Insbesondere kann eine Positionsänderung während des Betriebs erfolgen. Die einzelnen Positionen können elektrisch, beispielsweise mithilfe von Endschaltern bzw. Näherungsinitiatoren 12, die an Seitenschildem 13 der Wendetrommel 1 angebracht sind, erfolgen.

Das Leitblech 4 ist dazu ausgebildet einen Förderstrom A sowohl teilweise auf einen Fördeerstrom B1 als auch einen Förderstrom B2, wie es in Figur 1 gezeigt, aufzuteilen. Wie in Figur 2 gezeigt umfasst das Leitblech 4 zwei einander (etwa mittig bezüglich der Richtung der Achse der drehbaren Wendetrommel 1) überlappende Blechteile, die jeweils kontinuierlich ausgebildet sind und eine gegenüber dem zu verteilenden Förderstrom konkave Form aufweisen. Zudem weist das Leitblech 4 (etwa mittig bezüglich der Richtung der Achse der drehbaren Wendetrommel 1) ein Trennblech 14 auf, das senkrecht auf der konkaven Fläche des Leitblechs 4 steht, die durch die zwei Blechteile gebildet wird. Das Trennblech 14 hat eine Längsseite und eine Schmalseite, und die dem auftreffenden Förderstrom A (siehe Figur 1) zugewandte Längsseite steht senkrecht zur Bewegungsrichtung desselben bei Auftreffen auf das Trennblech 14. Ein Teil des zu verteilenden Materials wird in der Figur 2 links vom Betrachter aus gesehen über das hintere Teilblech des Leitblechs 4 verteilt und ein anderer Teil rechts vom Betrachter aus gesehen über das vordere Teilblech verteilt

In dem in Figur 2 gezeigten Beispiel ist das Trennblech 14 an der Welle 15 der Wendetrommel 1 entlang derselben verschiebbar justierbar angebracht. Eine gewünschte prozentuale Verteilung eines Förderstroms (etwa Förderstrom aus Figur 1) auf zwei Förderströme (etwa Förderströme B1 und B2 aus Figur 2) kann durch eine entsprechende Justierung des Trennblechs 14 erreicht werden.

Die gewünschte Justierung kann einmalig rein mechanisch, beispielsweise mithilfe einer Klemmeinrichtung, wie eines Spannsatzes, fixiert werden. Es kann jedoch bevorzugt sein, eine variable Justierung insbesondere während des Betriebs der Materialverteilervorrichtung zu ermöglichen. Hierzu kann das Trennblech 14 auf einem Überschubrohr über der Welle 15 der Drehtrommel 1 angebracht werden, und es kann die variable Justierung des entlang der Welle 15 beweglichen Trennbleches 14 mithilfe einer Bewegungsspindel, eines geeigneten Linearantriebs etc. erfolgen. Die variable Justierung kann beispielsweise durch eine Bedienperson erfolgen oder automatisch durch ein Mengenüberwachsungssystem gesteuert werden.

Die in den obigen Beispielen beschriebene Materialverteilervorrichtung kann insbesondere an der Übergabeposition einer Fördereinrichtung einer ersten Förderlinie auf eine Fördereinrichtung einer zweiten und/oder eine Fördereinrichtung einer dritten Förderlinie angeordnet sein, wobei die Fördereinrichtungen Förderbänder, Förderschnecken, Vibrationsrinnen, Zellenradschleusen, Trogketten- und Schachtkettenförderer, Rohrkettenförderer, Abwurfschurren und Abwurfgossen, etc. sein können.

## Patentansprüche

1. Materialverteilervorrichtung, die geeignet ist zum Verteilen eines Materialstroms (A) auf zumindest eine oder zwei Förderlinien (B1, B2), die eine drehbare Wendetrommel (1) umfasst, die zumindest ein Leitblech (2, 3, 4) umfasst und derart angeordnet ist, dass sie den zu verteilenden Materialstrom über das zumindest eine Leitblech (2, 3, 4) und teilweise oder vollständig auf die erste und/oder zweite Förderlinie (B1, B2) verteilen kann;
wobei die Materialverteilervorrichtung weiterhin
eine erste Ablaufschurre (5), über die zumindest ein Teil des zu verteilenden Materialstroms (A) auf die erste Förderlinie (B1) verteilt werden kann; und
eine zweite Ablaufschurre (6), über die zumindest ein Teil des zu verteilenden Materialstroms (A) auf die zweite Förderlinie (B2) verteilt werden kann, umfasst;
wobei
die drehbare Wendetrommel (1) dazu ausgebildet ist, den zu verteilenden Materialstrom über das zumindest eine Leitblech (2, 3, 4) und teilweise oder vollständig auf die erste (5) und zweite Ablaufschurre (6) zu verteilen;
die Wendetrommel (1) ein erstes, ein zweites und ein drittes Leitblech (2, 3,4) umfasst, und
der zu verteilende Materialstrom (A) in einer ersten Position der drehbaren Wendetrommel (1) über das erste Leitblech (2) vollständig auf die erste Ablaufschurre (5) verteilt werden kann,
in einer zweiten Position der drehbaren Wendetrommel (1) über das zweite Leitblech (3) vollständig auf die zweite Ablaufschurre (6) verteilt werden kann, und
in einer dritten Position der drehbaren Wendetrommel (1) über das dritte Leitblech (4) teilweise auf die erste Ablaufschurre (5) und teilweise auf die zweite Ablaufschurre (6) verteilt werden kann;
**dadurch gekennzeichnet dass**
das erste Leitblech (2) kontinuierlich und konvex gegenüber dem zu verteilenden Materialstrom (A) bei Auftreffen desselben auf das erste Leitblech (2) ausgebildet ist,
das zweite Leitblech (3) kontinuierlich und konkav gegenüber dem zu verteilenden Materialstrom (A) bei Auftreffen desselben auf das zweite Leitblech (3) ausgebildet ist, und
das dritte Leitblech (4) als ein zweigeteiltes gegenüber dem zu verteilende Materialstrom (A) bei Auftreffen desselben auf das dritte Leitblech (4) konkaves Blech ausgebildet ist, wobei die zwei Teile des zweigeteilten dritten Leitblechs (4) einander überlappen, und das dritte Leitblech (4) ein Trennblech (14) darauf zur Aufteilung des zu verteilenden Materialstroms (A) teilweise auf die erste Ablaufschurre (5) und teilweise auf die zweite Ablaufschurre (6) umfasst.

2. Die Materialverteilervorrichtung gemäß Anspruch 1, in der das erste, zweite und dritte Leitblech (2, 3, 4) derart über den Umfang der drehbaren Wendetrommel (1) angeordnet sind, dass mit einer vollständigen Umdrehung der Wendetrommel (1) die erste, zweite und dritte Position erreicht werden können.

3. Die Materialverteilervorrichtung gemäß Anspruch 1 oder 2, in der das Trennblech (14) eine Längsseite und eine Querseite aufweist und die Längsseite senkrecht zu dem auf dasselbe auftreffenden zu verteilenden Materialstrom ausgerichtet ist.

4. Die Materialverteilervorrichtung gemäß einem der Ansprüche 1 bis 3, in der das Trennblech (14) entlang der Wendetrommel (1), insbesondere entlang einer zentralen Welle (15) derselben, beweglich justierbar ist, so dass durch das dritte Leitblech (4) ein vorbestimmter Teil des zu verteilenden Materialstroms (A) auf die erste Ablaufschurre (5) und ein vorbestimmter Teil des zu verteilenden Materialstroms (A) auf die zweite Ablaufschurre (6) aufgeteilt werden kann.

5. Die Materialverteilervorrichtung gemäß einem der Ansprüche 1 bis 4, wobei das dritte Leitblech (4) dazu ausgebildet ist, 10 % bis 90 %, insbesondere 20 % bis 80 %, des zu verteilenden Materialstroms (A) auf die erste Ablaufschurre (5) und den Rest des zu verteilenden Materialstroms (A) auf die zweite Ablaufschurre (6) aufzuteilen.

6. Die Materialverteilervorrichtung gemäß Anspruch 4 oder 5, die weiterhin eine Justiereinrichtung umfasst, die dazu ausgebildet ist, das Trennblech (14) während des Betriebs der Materialverteilervorrichtung entlang der drehbaren Wendetrommel (1) zu justieren.

7. Die Materialverteilervorrichtung gemäß einem der Ansprüche 1 bis 6, die weiterhin eine Walze (7), insbesondere eine Splitwalze, umfasst, die zwischen der Wendetrommel (1) und den der Wendetrommel (1) nächstliegenden Kanten der ersten (5) und der zweiten (6) Ablaufschurre, insbesondere derart, dass sie die Teilungskante der ersten (5) und der zweiten (6) Ablaufschurre bildet, angeordnet ist.

8. Die Materialverteilervorrichtung gemäß Anspruch 7, die weiterhin einen ersten Antrieb (10) zum Antreiben der Wendetrommel (1) und einen zweiten Antrieb (11) zum Antreiben der Walze (15) umfasst.

9. Die Materialverteilervorrichtung gemäß einem der Ansprüche 1 bis 8, in der die erste (5) und/oder zweite Ablaufschurre (6) ein oder mehrere Abweiserbleche (9) und/oder eine oder mehrere Leitnasen (9) darauf ausgebildet aufweist.

10. Die Materialverteilervorrichtung gemäß einem der vorhergehenden Ansprüche, in der die drehbare Wendetrommel (1) dazu ausgebildet ist, Gewerbeabfall, Industrieabfall, Hausabfall etc., z.B. (Hart-)Kunststoff, Textilien, Verbundstoffe, Gummi oder Althölzer über das zumindest eine Leitblech und zumindest teilweise auf die erste und/oder zweite Förderlinie (B1, B2) zu verteilen.

11. Materialfördersystem, das umfasst:
eine erste Fördereinrichtung, insbesondere ein Förderband, das zum Fördern eines zu verteilenden Materialstroms (A) ausgebildet ist;
die Materialverteilervorrichtung gemäß einem der Ansprüche 1 bis 10;
eine zweite Fördereinrichtung, insbesondere ein Förderband, das zum Fördern zumindest eines Teils des von der Materialverteilervorrichtung über die erste Ablaufschurre (5) verteilten Materialstroms (B1) ausgebildet ist; und
eine dritte Fördereinrichtung, insbesondere ein Förderband, das zum Fördern zumindest eines Teils des von der Materialverteilervorrichtung über die zweite Ablaufschurre (6) verteilten Materialstroms (B2) ausgebildet ist.

## Claims

1. Material distribution device which is suitable for distributing a material flow (A) onto at least one or two conveying lines (B1, B2), comprising a rotatable turning drum (1) which comprises at least one guide plate (2, 3, 4) and which is arranged in such a way that it can distribute the material flow to be distributed via the at least one guide plate (2, 3, 4) and partially or fully onto the first and/or second conveying line (B1, B2);
wherein the material distribution device furthermore comprises
a first discharge chute (5), via which at least a portion of the material flow (A) to be distributed can be distributed onto the first conveying line (B1); and
a second discharge chute (6), via which at least a portion of the material flow (A) to be distributed can be distributed onto the second conveying line (B2);
wherein
the rotatable turning drum (1) is designed to distribute the material flow to be distributed via the at least one guide plate (2, 3, 4) and partially or fully onto the first (5) and second discharge chute (6);
the turning drum (1) comprises a first, a second and a third guide plate (2, 3, 4), and
the material flow (A) to be distributed, in a first position of the rotatable turning drum (1), can be distributed via the guide plate (2) fully onto the first discharge chute (5),
in a second position of the rotatable turning drum (1) can be distributed via the second guide plate (3) fully onto the second discharge chute (6), and
in a third position of the rotatable turning drum (1) can be distributed via the third guide plate (4) partially onto the first discharge chute (5) and partially onto the second discharge chute (6);
**characterised in that**
the first guide plate (2) is of continuous form and is convex in relation to the material flow (A) to be distributed when the latter strikes the first guide plate (2),
the second guide plate (3) is of continuous form and is concave in relation to the material flow (A) to be distributed when the latter strikes the second guide plate (3),
the third guide plate (4) is designed as a two-part plate which is concave in relation to the material flow (A) to be distributed when the latter strikes the third guide plate (4), wherein the two parts of the two-part third guide plate (4) overlap one another, and the third guide plate (4) comprises a dividing plate (14) thereon for apportioning the material flow (A) to be distributed partially onto the first discharge chute (5) and partially onto the second discharge chute (6).

2. Material distribution device according to claim 1, in which the first, second and third guide plates (2, 3, 4) are arranged around the circumference of the rotatable turning drum (1) in such a way that the first, second and third position can be reached with one complete revolution of the turning drum (1).

3. Material distribution device according to claim 1 or 2, in which the dividing plate (14) has a longitudinal side and a transverse side and the longitudinal side is oriented perpendicular to the material flow to be distributed which strikes said plate.

4. Material distribution device according to one of claims 1 to 3, in which the dividing plate (14) is movably adjustable along the turning drum (1), in particular along a central shaft (15) thereof, so that by means of the third guide plate (4) a predetermined portion of the material flow (A) to be distributed can be apportioned onto the first discharge chute (5) and a predetermined portion of the material flow (A) to be distributed can be apportioned onto the second discharge chute (6).

5. Material distribution device according to one of claims 1 to 4, wherein the third guide plate (4) is designed to apportion 10% to 90%, in particular 20% to 80%, of the material flow (A) to be distributed onto the first discharge chute (5) and the remainder of the material flow (A) to be distributed onto the second discharge chute (6).

6. Material distribution device according to claim 4 or 5, which furthermore comprises an adjustment device which is designed to adjust the dividing plate (14) along the rotatable turning drum (1) during operation of the material distribution device.

7. Material distribution device according to one of claims 1 to 6, which furthermore comprises a roller (7), in particular a split roller, which is arranged between the turning drum (1) and the edges of the first (5) and second (6) discharge chutes closest to the turning drum (1), in particular in such a way that it forms the dividing edge of the first (5) and second (6) discharge chute.

8. Material distribution device according to claim 7, which furthermore comprises a first drive (10) for driving the turning drum (1) and a second drive (11) for driving the roller (15).

9. Material distribution device according to one of claims 1 to 8, in which the first (5) and/or second discharge chute (6) has one or more deflector plates (9) and/or one or more guide protrusions (9) formed thereon.

10. Material distribution device according to one of the preceding claims, in which the rotatable turning drum (1) is designed to distribute commercial waste, industrial waste, domestic waste, etc., e.g. (hard) plastic, textiles, composites, rubber or waste wood, via the at least one guide plate and at least partially onto the first and/or second conveying line (B1, B2).

11. Material conveying system, which comprises:
a first conveying device, in particular a conveyor belt, which is designed to convey a material flow (A) to be distributed;
the material distribution device according to one of claims 1 to 10;
a second conveying device, in particular a conveyor belt, which is designed to convey at least a portion of the material flow (B1) distributed by the material distribution device via the first discharge chute (5); and
a third conveying device, in particular a conveyor belt, which is designed to convey at least a portion of the material flow (B2) distributed by the material distribution device via the second discharge chute (6).

## Revendications

1. Dispositif de répartition de matériau qui est apte à répartir un flux de matériau (A) sur au moins une ou deux lignes d'acheminement (B1, B2), qui comprend un tambour rotatif (1) pourvu d'au moins un déflecteur (2, 3, 4) et disposé de manière à pouvoir répartir ledit flux de matériau sur le ou les déflecteurs (2, 3, 4) et en partie ou entièrement sur les première et/ou seconde lignes d'acheminement (B1, B2) ;
étant précisé que le dispositif de répartition de matériau comprend par ailleurs
une première goulotte (5) par l'intermédiaire de laquelle une partie au moins du flux de matériau à répartir (A) peut être répartie sur la première ligne d'acheminement (B1) ; et
une seconde goulotte (6) par l'intermédiaire de laquelle une partie au moins du flux de matériau à répartir (A) peut être répartie sur la seconde ligne d'acheminement (B2) ;
que le tambour rotatif (1) est conçu pour répartir le flux de matériau à répartir sur le ou les déflecteurs (2, 3, 4) et en partie ou entièrement sur les première (5) et seconde (6) goulottes ;
que le tambour (1) comprend des premier, deuxième et troisième déflecteurs (2, 3, 4), et
que le flux de matériau à répartir (A), dans une première position du tambour rotatif (1), peut être réparti entièrement sur la première goulotte (5) par l'intermédiaire du premier déflecteur (2),
dans une deuxième position du tambour rotatif (1) peut être réparti entièrement sur la seconde goulotte (6) par l'intermédiaire du deuxième déflecteur (3), et
dans une troisième position du tambour rotatif (1) peut être réparti en partie sur la première goulotte (5) et en partie sur la seconde goulotte (6) par l'intermédiaire du troisième déflecteur (4) ;
**caractérisé en ce que** le premier déflecteur (2) a une forme continue et convexe par rapport au flux de matériau à répartir (A), lorsque celui-ci arrive sur le premier déflecteur (2),
**en ce que** le deuxième déflecteur (3) a une forme continue et concave par rapport au flux de matériau à répartir (A), lorsque celui-ci arrive sur le deuxième déflecteur (3), et
**en ce que** le troisième déflecteur (4) est conçu comme une tôle divisée en deux de forme concave par rapport au flux de matériau à répartir (A), lorsque celui-ci arrive sur le troisième déflecteur (4), les deux parties du troisième déflecteur (4) se recouvrant et le troisième déflecteur (4) comprenant une tôle de séparation (14) qui est formée sur lui pour répartir le flux de matériau (A) en partie sur la première goulotte (5) et en partie sur la seconde goulotte (6).

2. Dispositif de répartition de matériau selon la revendication 1, dans lequel les premier, deuxième et troisième déflecteurs (2, 3, 4) sont disposés sur la circonférence du tambour rotatif (1) de telle sorte qu'avec un tour complet du tambour (1), les première, deuxième et troisième positions puissent être atteintes.

3. Dispositif de répartition de matériau selon la revendication 1 ou 2, dans lequel la tôle de séparation (14) présente un côté longitudinal et un côté transversal, et le côté longitudinal est perpendiculaire au flux de matériau à répartir qui arrive sur ladite tôle de séparation.

4. Dispositif de répartition de matériau selon l'une des revendications 1 à 3, dans lequel la tôle de séparation (14) est ajustable de manière mobile le long du tambour (1), en particulier le long d'un arbre central (15) de celui-ci, de sorte que grâce au troisième déflecteur (4) une proportion prédéfinie du flux de matériau à répartir (A) peut être répartie sur la première goulotte (5) et qu'une proportion prédéfinie du flux de matériau à répartir (A) peut être répartie sur la seconde goulotte (6).

5. Dispositif de répartition de matériau selon l'une des revendications 1 à 4, dans lequel le troisième déflecteur (4) est conçu pour répartir 10 % à 90 %, en particulier 20 % à 80 % du flux de matériau à répartir (A) sur la première goulotte (5), et le reste du flux de matériau à répartir (A) sur la seconde goulotte (6).

6. Dispositif de répartition de matériau selon la revendication 4 ou 5, qui comprend par ailleurs un dispositif d'ajustement qui est conçu pour ajuster la tôle de séparation (14) le long du tambour rotatif (1) pendant le fonctionnement du dispositif de répartition de matériau.

7. Dispositif de répartition de matériau selon l'une des revendications 1 à 6, qui comprend par ailleurs un cylindre (7), un particulier un cylindre fendu, qui est disposé entre le tambour (1) et les bords des première (5) et seconde (6) goulottes les plus proches du tambour (1), en particulier de manière à former le bord de séparation des première (5) et seconde (6) goulottes.

8. Dispositif de répartition de matériau selon la revendication 7, qui comprend par ailleurs un premier entraînement (10) pour entraîner le tambour (1) et un second entraînement (11) pour entraîner le cylindre (7).

9. Dispositif de répartition de matériau selon l'une des revendications 1 à 8, dans lequel les première (5) et/ou seconde (6) goulottes présentent sur elles une ou plusieurs tôles de refoulement (9) et/ou une ou plusieurs saillies déflectrices (9).

10. Dispositif de répartition de matériau selon l'une des revendications précédentes, dans lequel le tambour rotatif (1) est conçu pour répartir par l'intermédiaire du ou des déflecteurs et au moins en partie sur les première et/ou seconde lignes d'acheminement (B1, B2) des déchets provenant des commerces, des déchets provenant des industries, des déchets ménagers, etc., par exemple du plastique (dur), des textiles, des matières composites, du caoutchouc ou du bois usagé.

11. Système d'acheminement de matériau, qui comprend :
un premier dispositif d'acheminement, en particulier un convoyeur à bande, qui est conçu pour l'acheminement d'un flux de matériau à répartir (A) ;
le dispositif de répartition de matériau selon l'une des revendications 1 à 10 ;
un deuxième dispositif d'acheminement, en particulier un convoyeur à bande, qui est conçu pour l'acheminement d'une partie au moins du flux de matériau (B1) réparti par le dispositif de répartition de matériau par l'intermédiaire de la première goulotte (5) ; et
un troisième dispositif d'acheminement, en particulier un convoyeur à bande, qui est conçu pour l'acheminement d'une partie au moins du flux de matériau (B2) réparti par le dispositif de répartition de matériau par l'intermédiaire de la seconde goulotte (6).
